# EUROPÄISCHE PATENTSCHRIFT

(11) **EP 1 928 699 B1**
(45) Veröffentlichungstag und Bekanntmachung des Hinweises auf die Patenterteilung: **03.06.2009**
(21) Anmeldenummer: 06805841.1
(22) Anmeldetag: 25.09.2006
(51) Int. Cl.: B60R 7/06

(54) **HANDSCHUHKASTEN, INSBESONDERE FÜR KRAFTFAHRZEUGE**
GLOVE COMPARTMENT, IN PARTICULAR FOR MOTOR VEHICLES
BOITE A GANTS CONÇUE EN PARTICULIER POUR DES VEHICULES AUTOMOBILES

(30) Priorität: 26.09.2005 DE 202005015333 U
(43) Veröffentlichungstag der Anmeldung: 11.06.2008
(73) Patentinhaber: PEGUFORM GMBH, 79268 Bötzingen (DE)
(72) Erfinder: JOHANNBÖKE, Eckhard, 79346 Endingen (DE); NOGARET, Eric, F-68600 Biesheim (FR); STEBNER, Stephan, 79353 Bahlingen (DE)
(74) Vertreter: Neunert, Peter Andreas
(86) Internationale Anmeldenummer: PCT/EP2006/009282
(87) Internationale Veröffentlichungsnummer: WO 2007/036339

(56) Entgegenhaltungen:
- EP-A- 1 048 525
- DE-A1- 3 432 739
- FR-A1- 2 752 792

## Beschreibung

Die vorliegende Erfindung betrifft einen Handschuhkasten, insbesondere für Kraftfahrzeuge.

Aus der DE 43 02 948 A1 ist ein Handschuhfach bekannt, das in seinem oberen Bereich eine Vorrichtung zur Halterung von Getränkedosen oder dergleichen Behältnissen aufweist, wobei die Vorrichtung wenigstens ein Aufnahmeteil für zumindest eine Getränkedose umfasst. Das Aufnahmeteil ist an einem Schlitten abgestützt, der mit einer Führungsschiene innerhalb des Handschuhfaches zusammenwirkt. In eingefahrener Ruhelage der Vorrichtung wird diese zusammen mit dem Handschuhfach durch einen einstückigen Handschuhkastendeckel abgedeckt, der um eine zur Fahrzeugquerachse parallele Achse schwenkbar ist. Diese Anordnung hat den Nachteil, dass die Vorrichtung einerseits einen relativ aufwendigen Aufbau aufweist und andererseits vor dem Verlagern des Aufnahmeteils für z. B. eine Getränkedose stets der relativ große Handschuhkastendeckel zunächst weit geöffnet werden muss, wodurch die Beinfreiheit für den Beifahrer eingeschränkt wird.

Eine Weiterbildung dieser Erfindung wird in der DE 101 49 402 A1 beschrieben, bei der die Schwierigkeiten durch das Aufklappen des Deckels dadurch vermieden werden, dass für den oberen Bereich des Handschuhfachs, der durch zusätzliche Geräte oder Funktionsteile genutzt werden soll, eine separate Abdeckung vorgesehen ist. Da die Abdeckung des oberen Bereichs relativ klein ist, kann beim Aufklappen des oberen Deckels eine Behinderung der Beinfreiheit vermieden werden. Diese Weiterbildung hat jedoch den Nachteil, dass der obere Bereich des Handschuhkastens nun quasi einen eigenen kleinen Handschuhkasten ausbildet mit einer separaten Klappe zum Verschließen des Bereichs, was gegenüber der Ausführung mit einem einteiligen Deckel den Nachteil eines zusätzlich benötigten Schließmechanismus mit sich bringt. Neben dem zusätzlichen technischen Aufwand besteht ein weiterer Nachteil dieser Ausführungsform darin, dass beim vollständig geöffneten Handschuhfach für den Fall, dass sämtliche Funktionen des Handschuhfachs genutzt werden sollen, sich die Abdeckung des oberen Bereiches des Handschuhfaches mitten im Eingriffsbereich des gesamten Handschuhfaches befindet und so den Zugriff behindert.

In der DE 102 59 414 A1 wird ein Handschuhfach mit einem Innenfach beschrieben, das zwischen einer geschlossenen und einer geöffneten Position verschwenkbar angeordnet ist, wobei eine Hebelmechanik und eine Kulissensteuerung mit einer Steuerkurve den Deckel, das Innenfach und das Gehäuse des Handschuhfachs derart koppelt, dass durch das Schließen des Ablagefachs automatisch auch das Innenfach geschlossen wird. Das Öffnen des Innenfachs dagegen erfolgt manuell, nachdem eine entsprechende Zugriffsseite des Innenfachs durch Öffnen des Handschuhfachs zugänglich gemacht wurde. Hier hat man versucht, die Beinfreiheit des Beifahrers bei geöffnetem Handschuhfach dadurch zu gewährleisten, dass das Handschuhfach durch ein moderates Verschwenken des Handschuhfachdeckels geöffnet wird und die dadurch begrenzte Zugangsmöglichkeit zum Innern des Fachs und die mangelnde Ausnutzung des Platzes dadurch auszugleichen, dass man ein separates Innenfach ausgebildet hat, das bei Bedarf zugängig gemacht werden kann. Der Nachteil dieser Anordnung liegt in der relativ aufwendigen Technik. Hinzu kommt, dass das verschwenkbare Innenteil nur für bestimmte, fest installierte Funktionen genutzt werden kann und als Ablage ungeeignet ist.

In der DE 100 39 305 B4 wird ein Führungsmechanismus für eine Abdeckplatte eines Handschuhfachs beschrieben, der insgesamt mindestens vier Drehgelenke und zwei Hebel umfasst, wobei die Abdeckplatte des Handschuhfachs zunächst gegenüber der Armaturentafel angehoben wird und anschließend annähernd parallel zur äußeren Fläche der Armaturentafel verschoben wird. Dieser Öffnungsmechanismus ist konzipiert für ein einteiliges Handschuhfach, eine separate Nutzung unterschiedlicher Bereiche des Handschuhfachs ist mit dieser Anordnung nicht möglich.

Die DE 34 32 739 C2 beschreibt einen Handschuhkasten für Kraftfahrzeuge, mit einem zwei seitliche Führungselemente umfassenden Handschuhfach und einem Deckel, der eine Schließ-, eine Öffnungs- und eine durch einen Zwischenanschlag definierte Zwischenposition einnehmen kann, wobei in der Zwischenposition ein erster oberer Öffnungsbereich des Handschuhkastens freigegeben ist und erst in der Öffnungsposition das gesamte Handschuhfach freigegeben ist, wobei der Deckel zusätzlich einen seitlich abstehenden ersten Zapfen und gegenüberliegend einen seitlich abstehenden zweiten Zapfen, die zusammen eine Rotationsachse darstellen, um die der Deckel parallel zur Fahrzeugquerachse schwenkbar ist, und einen Hebel, der mit dem Deckel starr verbunden ist und ein Führungselement aufweist, umfasst und die zwei seitlichen Führungselemente ein erstes seitliches Führungselement mit einer ersten Führungsnut, in die der erste Zapfen im Eingriff ist, und einer zweiten Führungsnut, in die das Führungselement des Hebels im Eingriff ist, sowie ein zweites seitliches Führungselement mit mindestens einer, zur ersten Führungsnut des ersten seitlichen Führungselements synchron verlaufenden ersten Führungsnut, in die der zweite Zapfen im Eingriff ist, umfassen, wobei der Verlauf der ersten und zweiten Führungsnuten so gestaltet ist, dass der Deckel zunächst aus der Schließposition nach unten gelöst ist und dann in Fahrtrichtung entlang der Kontur des Handschuhfachs bis zur Zwischenposition geführt ist. Dieses Dokument beschreibt dabei einen Deckel für ein Handschuhfach, der von der Öffnung des Handschuhfachs weg nach oben oder unten hinter der Wandung der Armaturentafel bewegbar ist. Entsprechende Kulissenführungen sorgen dafür, dass der Deckel im geöffneten Zustand nicht in den Fahrgastraum ragt und dort bspw. die Beinfreiheit des Beifahrers einschränkt. Gleichzeitig ist für die Ablageflächen, die in zwei übereinanderliegende Fachteile unterteilt sind, eine Zwischenraste zur Arretierung des Deckels in einer Zwischenstellung vorgesehen, in der nur ein Bereich des Handschuhfachs zugänglich ist. Diese Anordnung hat den Nachteil, dass das Handschuhfach integraler Bestandteil der gesamten Armaturentafel ist und eine entsprechende Anpassung zwischen Armaturentafel und Handschuhfach erforderlich ist, was zu entsprechenden Einschränkungen bei der Gestaltungsfreiheit führt. Hinzu kommt, dass das Versenken des Deckels des Handschuhfachs hinter der Wandung der Armaturentafel relativ viel Platz in diesem Bereich benötigt und die Armaturentafel entsprechend dimensioniert werden muss.

Der vorliegenden Erfindung liegt die Aufgabe zugrunde, die Nachteile des Standes der Technik und des aus der DE 34 32 739 C2 bekannten Handschuhfachs bei der Bereitstellung eines Handschuhkastens zu vermeiden.

Diese Aufgabe wird durch ein Handschuhfach mit den Merkmalen des Anspruchs 1 gelöst. Vorteilhafte Ausführungsformen und Weiterentwicklungen des Erfindungsgedankens sind Gegenstand der Unteransprüche.

Die oben genannten Nachteile können durch einen zweistufigen Öffnungsmechanismus des Handschuhkastendeckels gelöst werden.
Dieser Öffnungsmechanismus kann elektrisch oder auch mechanisch betrieben werden, wobei in der ersten Stufe der Handschuhkastendeckel in einer Bewegung zunächst leicht zum Benutzer hin nach unten so weit aufklappt, dass er anschließend konturnah zum Handschuhfach in Fahrtrichtung bis zur Endposition einer ersten Öffnungsstufe (Zwischenposition) verschoben werden kann. Dabei bleibt sowohl der Knieaufprallschutz vorhanden und auch die Kniefreiheit wird nicht eingeschränkt. Durch diese Bewegung der ersten Öffnungsstufe wird der obere Bereich des Handschuhkastens frei zugänglich und kann mit den unterschiedlichsten Einbaukomponenten, wie z. B. Becherhalter, Laptop, Telefon, Radio, CD-oder MP3-Player, Navigationssystem oder anderes ausgerüstet werden.

Ähnlich wie das in der DE 4 302 948 A1 beschriebene Handschuhfach ist der erfindungsgemäße Handschuhkasten mit einem einzigen Deckel ausgerüstet, der an seiner Unterkante gegenüberliegend zwei seitlich abstehende Zapfen aufweist, die zusammen eine Rotationsachse darstellen, um die der Deckel parallel zur Fahrzeugquerachse schwenkbar ist. Der Deckel selber kann insgesamt drei Positionen einnehmen, wobei in der Schließposition das Handschuhfach vollständig verschlossen ist, in der Öffnungsposition das Handschuhfach vollständig geöffnet ist und in einer Zwischenposition der obere Teil des Handschuhfachs freigegeben ist.

Durch eine besondere Führung des Deckels beim Öffnen gelingt es, die Zwischenposition einzunehmen, bei der der obere Teil des Handschuhfachs freigegeben ist, ohne dass es zu einer Behinderung der Beinfreiheit des Beifahrers kommt. In dieser Position ist auch der Knieaufprallschutz weiterhin gewährleistet. Die Linienführung des Öffnungssystems ist weiterhin so gewählt, dass auch in der Öffnungsposition, bei der das gesamte Handschuhfach freigegeben ist, ausreichend Beinfreiheit für den Beifahrer vorhanden ist.

Die oben beschriebene Führung des Deckels beim Öffnen wird durch zwei seitliche Führungselemente bewirkt, die an der Handschuhkastenaußenseite angeordnet sind. Diese Führungselemente enthalten mindestens jeweils eine erste Führungsnut und mindestens eines der beiden Führungselemente enthält eine zweite Führungsnut. In die erste Führungsnut greifen die oben erwähnten seitlich abstehenden Zapfen des Deckels als Führungselemente ein, die gleichzeitig als Rotationsachse wirken. In die zweite Führungsnut greift ein Führungselement ein, das an einem Hebel angeordnet ist, der seitlich mit dem Handschuhkastendeckel starr verbunden ist.

Der Verlauf der Führungsnuten ist nun so gestaltet, dass der Deckel zunächst aus seiner Schließposition nach unten soweit geöffnet wird, dass er in Fahrtrichtung entlang der Kontur des Handschuhfachs bis zur Zwischenposition, bei der der obere Teil des Handschuhfachs freigegeben ist, verschoben werden kann. In dieser Position wird der Handschuhfachdeckel durch ein Zwischenanschlag fixiert. Der Verlauf der zweiten Führungsnut ist weiter so gestaltet, dass der Deckel aus dieser Position zur vollständigen Öffnung des Handschuhkastens um die Rotationsachse nach unten geschwenkt werden kann, wobei die Klappbewegung des Deckels allein durch das an dem starr mit dem Deckel verbundenen Hebel befindliche Führungselement geführt wird, während die durch die Zapfen gebildete Rotationsachse nach Erreichen der Zwischenposition in ihrer Lage vorzugsweise unverändert bleibt.

Die erste Führungsnut ist auf beiden seitlichen Führungselementen so ausgebildet, dass die beiden ersten Führungsnuten synchron und weitgehend parallel zur Kontur des Handschuhfachs in Fahrtrichtung verlaufen. In diese ersten Führungsnuten greifen die beiden Zapfen ein, die die Rotationsachse bilden. In die zweite Führungsnut greift das Führungselement, das am Hebel ausgebildet ist, ein. Mit Hilfe dieser zweiten Führungsnut wird das Schwenken und das Verschieben des Deckels bewerkstelligt. Dabei wird der Deckel aus der Schließposition in einem ersten Schritt zum Öffnen leicht gegen die Fahrtrichtung vorzugsweise gradlinig nach unten geführt, wodurch der Handschuhkasten soweit geöffnet wird, dass in einem zweiten Schritt ein anschließendes Verschieben des Deckels in Fahrtrichtung entlang der Kontur des Handschuhfachs ermöglicht wird. Die Verschiebungsbewegung erfolgt vorzugsweise in einem leicht nach oben gekrümmten Kreisbogen mit einem Winkel von ca. 20 bis 60° in Fahrtrichtung nach unten bis hin zur Zwischenposition. In dieser Zwischenposition ist das Handschuhfach soweit geöffnet, dass der obere Bereich des Handschuhfachs zugänglich ist, während der untere Bereich des Handschuhfachs weiterhin durch den Deckel abgedeckt ist.

Der Deckel liegt dabei konturnah am Handschuhfach an und die Beinfreiheit des Beifahrers wird nicht eingeschränkt. Gleichzeitig bleibt der Knieaufprallschutz in Form des Handschuhfachdeckels erhalten. Der Deckel wir in dieser Position durch einen Zwischenanschlag fixiert. Die Rotationsachse hat bei Erreichen der Zwischenposition des Deckels ihre Endposition in der ersten Führungsnut in Fahrtrichtung erreicht, wenn das am Hebel befindliche Führungselement die Zwischenposition in der zweiten Führungsnut erreicht hat.

In einem dritten Schritt kann nun der Deckel vorzugsweise in einem nach unten gekrümmten Kreisbogen mit einem Winkel von ca. 30 bis 60°, bezogen auf den Verlauf der ersten Öffnungsstufe, gegen die Fahrtrichtung nach unten hin aufgeklappt werden. Beim Aufschwenken bleibt die Rotationsachse in ihrer Position vorzugsweise unverändert, während das Führungselement am Hebel über die zweite Führungsnut in seine Endposition gelangt. In dieser Endposition ist nun der gesamte Handschuhkastenbereich zugänglich. Durch die Verschiebung des Deckels während der ersten Öffnungsstufe in Fahrtrichtung ist auch im vollständig geöffneten Zustand des Handschuhkastens ausreichend Beinfreiheit für den Beifahrer gesichert.

Bei einer bevorzugten Ausführungsform der vorliegenden Erfindung sind die beiden die Rotationsachse bildenden und seitlich abstehenden Zapfen durch eine Verbindungswelle ersetzt, die in die beiden ersten Führungsnuten eingreift und damit die Verschiebung des Deckels in Fahrtrichtung führt.

Bei einer ebenfalls bevorzugten Ausführungsform sind die Zapfen oder die Verbindungswelle zusätzlich mit Zahnrädern bestückt, die in an den Führungselementen im Bereich der ersten Führungsnuten montierten Zahnstangen eingreifen und damit die Bewegung des Deckels synchronisieren.

Eine weitere bevorzugte Ausführungsform sieht zusätzlich an dem Hebel, der insbesondere die Klappbewegung des Deckels führt, einen Dämpfer vor, der ein zu schnelles Aufschwenken des Deckels verhindert. Dieser Dämpfer kann auch direkt am Führungselement des Hebels angreifen.

In der Zwischenposition ist der Deckel durch einen Zwischenanschlag fixiert, wobei diese Fixierung beispielsweise durch einen federgelagerten Raststift erfolgen kann, der zum weiteren Öffnen und zum vollständigen Aufschwenken des Deckels heruntergedrückt wird.

Das Öffnen und die Bewegungen des Deckels können rein mechanisch erfolgen, oder aber durch elektrische Stellmotoren unterstützt werden, die beispielsweise an der Verbindungswelle oder an den Zahnrädern eingreifen.

Mit Hilfe dieses zweistufigen Öffnungsmechanismus kann der obere Bereich des Handschuhkastens zugänglich gemacht werden, ohne dass dabei die Beinfreiheit des Beifahrers eingeschränkt wird, so dass der obere Öffnungsbereich des Handschuhkastens auch während der Fahrt geöffnet bleiben und genutzt werden kann. Die Funktion des Knieaufprallschutzes bleibt erhalten und auch die Funktion der Airbags wird nicht beeinträchtigt.

Im einfachsten Falle können zusätzliche Staufächer für Kleingegenstände oder Unterlagen geschaffen werden. Besonders vorteilhaft geeignet ist der obere Öffnungsbereich für die Integration und Nutzung von Zusatzgeräten, wie z. B. Telefon, Radio, CD-Wechsler, MP3-Player, Navigationssystem, Becherhalter, Laptop etc.

Die mit der Erfindung hauptsächlich erzielten Vorteile sind darin zu sehen, dass auf eine separate Abdeckung des oberen Bereichs des Handschuhkastens verzichtet werden kann, ohne dass dadurch die Beinfreiheit des Beifahrers beeinträchtigt wird. Ein weiterer Vorteil der Erfindung besteht darin, dass selbst bei vollständig geöffneter Klappe eine ausreichende Beinfreiheit gegeben ist und gleichzeitig sämtliche Funktionen des Handschuhkastens bzw. der darin integrierten Geräte leicht zugänglich sind.

Im Folgenden wird die Erfindung anhand von Zeichnungen ausführlich erläutert, die beispielhafte Ausführungsformen der Erfindung wiedergeben. Dabei zeigen:
- Fig. 1: eine perspektivische Darstellung des Handschuhkastens mit einer angedeuteten Linienführung der beiden Öffnungsstufen,
- Fig. 2: eine Darstellung des Handschuhkastens in der Schließposition,
- Fig. 3: eine Darstellung des Handschuhkastens in der Zwischenposition,
- Fig. 4: eine Darstellung des Handschuhkastens in der Öffnungsposition,
- Fig. 5: die beiden seitlichen Führungselemente mit Verbindungswelle,
- Fig. 6: Zahnrad mit Zahnstange

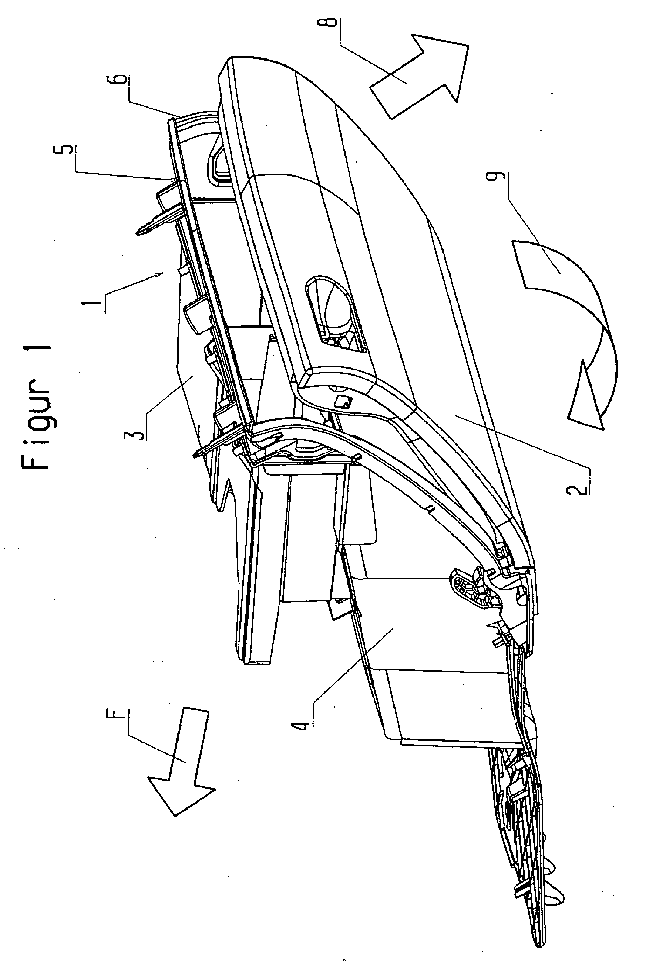

Die Figur 1 zeigt den erfindungsgemäßen Handschuhkasten 1 in einer perspektivischen Darstellung. In der der Figur 1 zugrunde liegenden Ausführungsform besteht der Handschuhkasten 1 aus einem Handschuhkastenoberteil 3 und einem Handschuhkastenunterteil 4, die zusammen das Handschuhfach 5 bilden. Die Linienführung der beiden Öffnungsstufen 8 und 9 sind durch entsprechende Pfeile angedeutet. Dabei ist die erste Öffnungsstufe 8 eine Kombination aus Aufschwenken senkrecht zur Fahrtrichtung und Verschieben in Fahrtrichtung, während die zweite Öffnungsstufe 9 ein reines Aufschwenken um die Rotationsachse 7 darstellt. Die Figur 1 zeigt den noch nicht vollständig geöffneten Handschuhkasten 1, bei dem der Deckel 2 die Aufklappbewegung bereits durchgeführt aber die Verschiebung in Fahrtrichtung F noch nicht abgeschlossen und die Zwischenposition des Deckels 2 noch nicht erreicht ist.

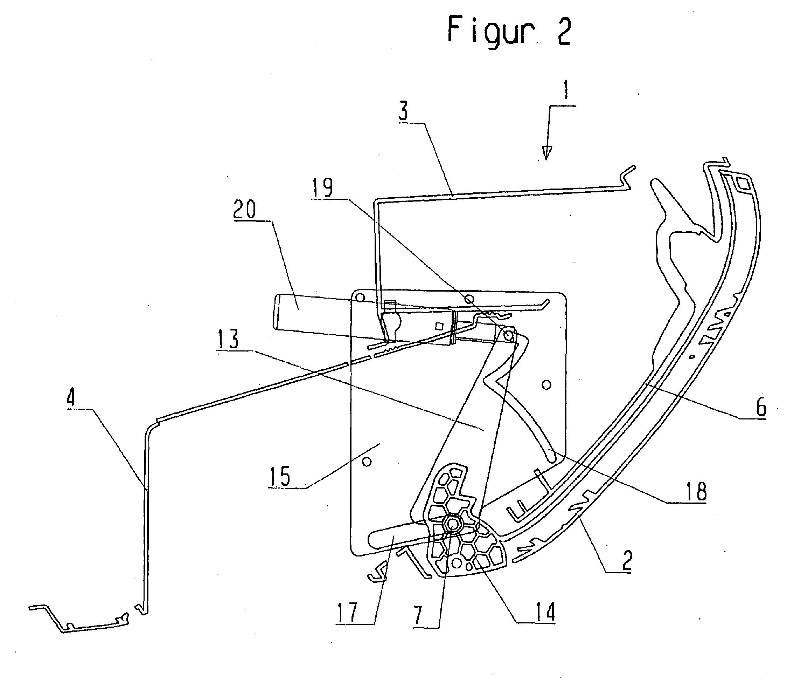

Die Figur 2 zeigt den erfindungsgemäßen Handschuhkasten 1 in der Schließposition. Der Handsqhuhkastendeckel 2 liegt direkt am Handschuhfachrand 6 an. Der Handschuhkastendeckel 2 selber ist mit einem Hebel 13 über einen Verbindungswinkel 14 fest verbunden. An der Unterkante des Handschuhkastendeckels 2 ist die Rotationsachse 7 zu erkennen, um die nicht nur der Handschuhkastendeckel 2 sondern auch der Winkel 13 schwenkt. Der Winkel 13 ist mit einem Führungselement 19 ausgerüstet, das in die zweite Führungsnut 18 eingreift. Die Bewegungen des Handschuhkastendeckels 2, die über den Hebel 13 mittels der Nut 18 geführt werden, werden durch den Dämpfer 20 gedämpft. Der Zapfen 7 (bzw. die Rotationsachse 7) befindet sich in der Ausgangsstellung in der ersten Führungsnut 17 in der äußersten Position entgegen der Fahrtrichtung. Das Führungselement 19 befindet sich in seiner Ausgangsstellung in der ersten Stufe 22 der Führungsnut 18.

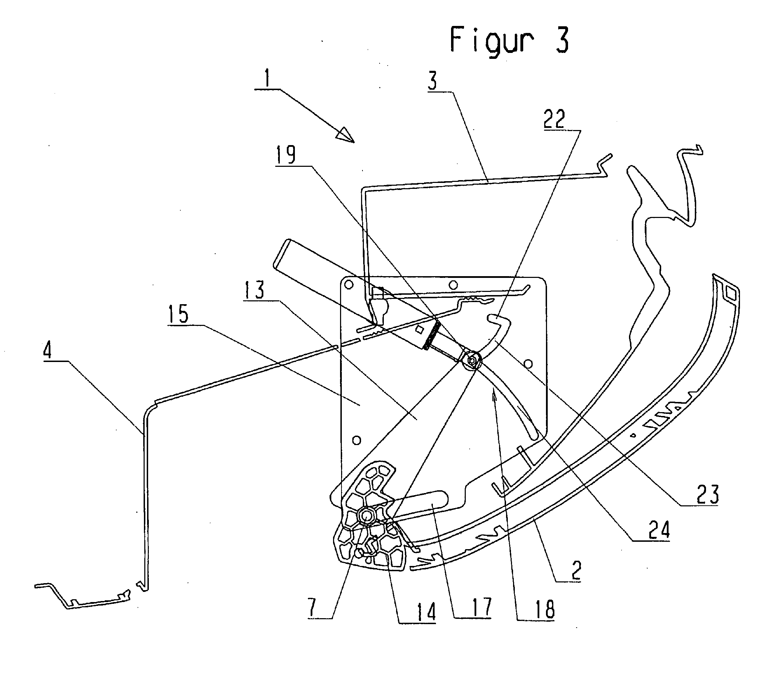

Figur 3 zeigt den erfindungsgemäßen Handschuhkasten 1 in der Zwischenposition mit geöffnetem oberen Bereich 11 des Handschuhfachs 5. Das Führungselement 19 hat die erste Stufe 22 und die zweite Stufe 23 der Führungsnut 18 durchlaufen und befindet sich in der Halteposition nach der ersten Öffnungsstufe 8. Die Rotationsachse 7 befindet sich in ihrer Endposition in der ersten Führungsnut 17.

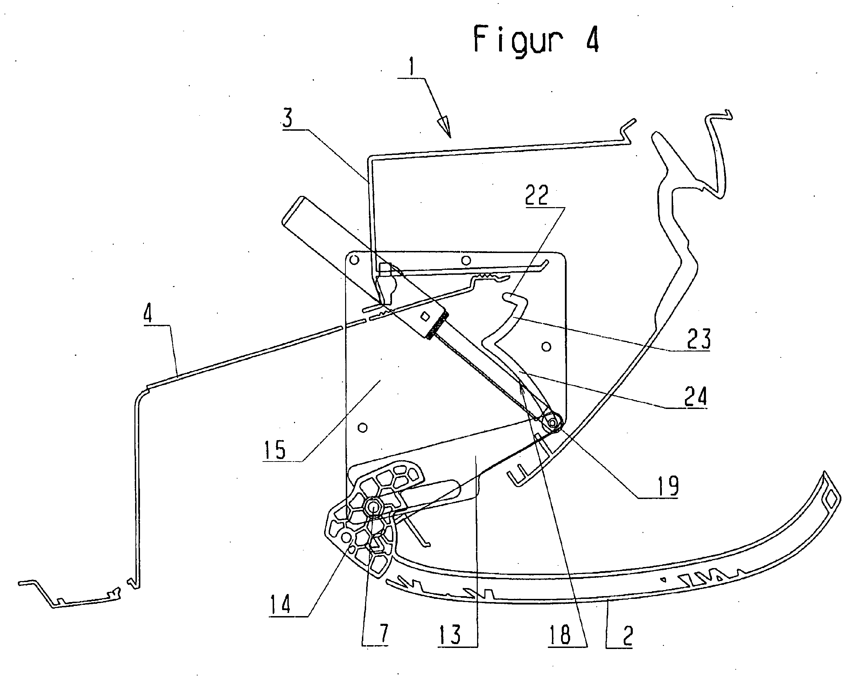

Figur 4 zeigt den erfindungsgemäßen Handschuhkasten in der Öffnungsposition mit vollständig geöffnetem Handschuhfach 5. Das Führungselement 19 hat seine Endposition in der Führungsnut 18 erreicht. Die Rotationsachse 7 befindet sich unverändert in der Endposition der Führungsnut 17.

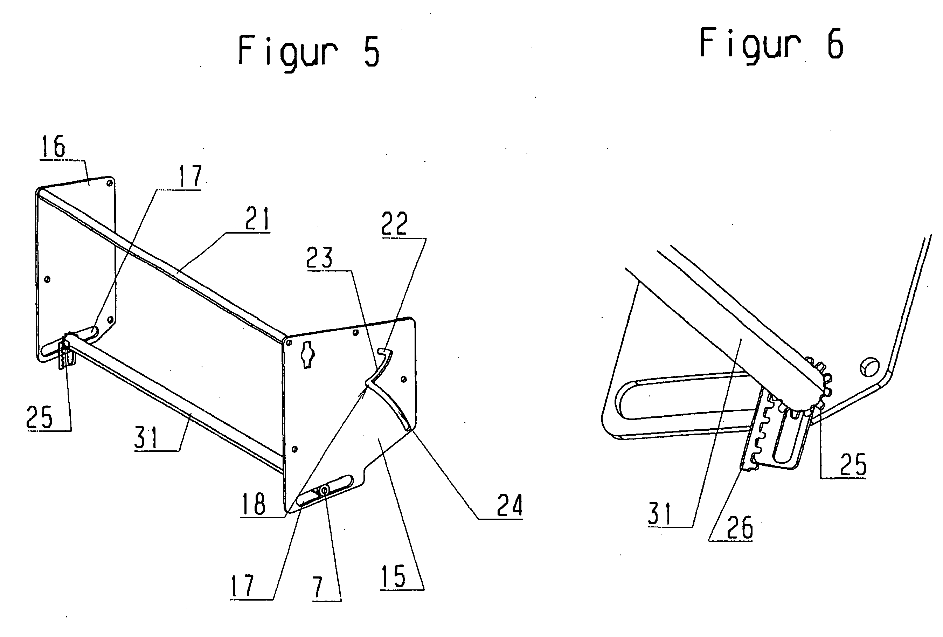

Figur 5 zeigt eine schematische Darstellung der beiden seitlichen Führungselemente 15, 16 mit einer Verbindungswelle 31, die anstelle der Zapfen 7 als Rotationsachse fungiert. Die Verbindungswelle ist mit Zahnrädern 25 ausgerüstet. Zusätzlich sind die beiden seitlichen Führungselemente 15, 16 mit Hilfe einer Halterung 21 verbunden. Bei der in der Figur 5 gezeigten Ausführungsform weist lediglich das erste seitliche Führungselement 15 zwei Führungsnuten 17, 18 auf. Das zweite seitliche Führungselement 16 ist ausschließlich mit einer ersten Führungsnut 17 ausgerüstet.

Wie aus den Figuren 2, 3 und 4 zu erkennen ist, lässt sich die Führungsnut 18 in drei Teilbereiche unterteilen:
a) Die erste Stufe 22 der zweiten Führungsnut 18 führt nahezu gradlinig in einem flachen Winkel nach unten gegen die Fahrtrichtung F, um das Öffnen des Deckels 2 zu ermöglichen und einen Abstand des Deckels 2 vom Handschuhfachrand 6 zu realisieren.
b) Eine zweite Stufe 23 führt auf einem leicht nach oben gekrümmten Kreisbogen und einem Winkel von ca. 20 bis 60° in Fahrtrichtung F nach unten, wodurch der Deckel in die Zwischenposition geführt wird. Gleichzeitig mit dem Durchlauf der zweiten Stufe 23 des am Hebel 13 angesetzten Führungselements 19 durchläuft der Zapfen 7 die Führungsnut 17 und erreicht seine Endposition in Fahrtrichtung F.
c) Die dritte Stufe 24 der zweiten Führungsnut 18 führt das Aufschwenken des Deckels 2 senkrecht zur Fahrtrichtung F. Dabei verbleibt die Rotationsachse 7 in ihrer Endposition in der Führungsnut 17, während das Hebelführungselement 19 seine Endposition in der Führungsnut 18 einnimmt und der Deckel 2 des Handschuhkastens 1 vollständig aufgeklappt ist.

Figur 6 zeigt das für die Synchronisation eingesetzte Zahnrad 25 im Zusammenspiel mit der Zahnstange 26.

Die in den Zeichnungen dargestellten Ausführungsbeispiele wurden lediglich ausgewählt, um die vorliegende Erfindung näher zu erläutern, und sind nicht als Einschränkung der vorliegenden Erfindung zu sehen, deren Umfang durch die nachfolgend aufgeführten Ansprüche wiedergegeben ist.

### Bezugszeichenliste

- 1: Handschuhkasten
- 2: Deckel
- 3: Handschuhkasten-Oberteil
- 4: Handschuhkasten-Unterteil
- 5: Handschuhfach
- 6: Handschuhfachrand
- 7: Zapfen (Rotationsachse)
- 8: Erste Öffnungsstufe
- 9: Zweite Öffnungsstufe
- 10: Verschluss
- 11: Oberer Öffnungsbereich
- 12: Unterer Öffnungsbereich
- 13: Hebel
- 14: Verbindungswinkel
- 15: Erstes seitliches Führungselement
- 16: Zweites seitliches Führungselement
- 17: Erste Führungsnut
- 18: Zweite Führungsnut
- 19: Führungselement (Hebel)
- 20: Dämpfer
- 21: Halterung
- 22: Erste Stufe Führungsnut 18 (Öffnen)
- 23: Zweite Stufe Führungsnut 18 (Verschieben)
- 24: Dritte Stufe Führungsnut 18 (Klappen)
- 25: Zahnrad
- 26: Zahnstange
- 31: Verbindungswelle
- F: Fahrtrichtung

## Patentansprüche

1. Handschuhkasten (1), insbesondere für Kraftfahrzeuge, mit einem zwei seitliche Führungselemente (15, 16) umfassenden Handschuhfach (5) und einem Deckel (2), der eine Schließ-, eine Öffnungs- und eine durch einen Zwischenanschlag definierte Zwischenposition einnehmen kann, wobei in der Zwischenposition ein erster oberer Öffnungsbereich (11) des Handschuhkastens freigegeben ist und erst in der Öffnungsposition das gesamte Handschuhfach (5) freigegeben ist,
wobei der Deckel (2) zusätzlich:
- einen seitlich abstehenden ersten Zapfen (7) an einer Unterkante und gegenüberliegend einen seitlich abstehenden zweiten Zapfen (7), die zusammen eine Rotationsachse (7) darstellen, um die der Deckel (2) parallel zur Fahrzeugquerachse schwenkbar ist, und
- einen Hebel (13), der mit dem Deckel (2) starr verbunden ist und ein Führungselement (19) aufweist,
umfasst und die zwei seitlichen Führungselemente (15, 16):
- ein erstes seitliches Führungselement (15) mit einer ersten Führungsnut (17), in die der erste Zapfen (7) im Eingriff ist, und einer zweiten Führungsnut (18), in die das Führungselement (19) des Hebels (13) im Eingriff ist, sowie
- ein zweites seitliches Führungselement (16) mit mindestens einer, zur ersten Führungsnut (17) des ersten seitlichen Führungselements (15) synchron verlaufenden ersten Führungsnut (17), in die der zweite Zapfen (7) im Eingriff ist, wobei der Verlauf der ersten und zweiten Führungsnuten (17, 18) so gestaltet ist, dass der Deckel (2) zunächst aus der Schließposition nach unten gelöst ist, dann in Fahrtrichtung (F) entlang der Kontur des Handschuh fachs (5) bis zur Zwischenposition geführt ist und anschließend zur vollständigen Öffnung des Handschuhkastens (1) um die Rotationsachse (7) nach unten schwenkt,
umfassen.

2. Handschuhkasten (1) nach Anspruch 1,
**dadurch gekennzeichnet, dass** die erste Führungsnut (17) weitgehend parallel zur Kontur des Handschuhfachs (5) in Fahrtrichtung (F) geführt ist.

3. Handschuhkasten (1) nach Anspruch 1 oder 2,
**dadurch gekennzeichnet, dass** die zweite Führungsnut (18) aus der Schließposition in einer ersten Stufe (22) zum Öffnen des Deckels gegen die Fahrtrichtung (F) mit einem Winkel von ca. 20 bis 60° nach unten geführt ist, anschließend in einer zweiten Stufe (23) mit einem Winkel von ca. 20 bis 60 ° in Fahrtrichtung (F) nach unten zur Zwischenposition geführt ist, wobei der Deckel (2) in Fahrtrichtung (F) entlang der Kontur des Handschuhfachs (5) geführt ist, und schließlich in einer dritten Stufe (24) zum vollständigen Aufschwenken des Deckels (2) mit einem Winkel von ca. 30 bis 60°, bezogen auf den Verlauf der zweiten Stufe (23), gegen die Fahrtrichtung (F) nach unten geführt ist.

4. Handschuhkasten (1) nach Anspruch 3,
**dadurch gekennzeichnet, dass** vorzugsweise die erste Stufe (22) geradlinig, die zweite Stufe (23) in einem leicht nach oben gekrümmten Kreisbogen und die dritte Stufe (24) in einem nach unten gekrümmten Kreisbogen geführt ist.

5. Handschuhkasten (1) nach einem der Ansprüche 1 bis 4,
**dadurch gekennzeichnet, dass** die Rotationsachse (7) in der Endposition der ersten Führungsnut (17) in Fahrrichtung vorliegt, wenn das Führungselement (19) des Hebels (2) die Zwischenposition in der zweiten Führungsnut (18) erreicht hat.

6. Handschuhkasten (1) nach einem der Ansprüche 1 bis 5,
**dadurch gekennzeichnet, dass** die seitlich abstehenden Zapfen (7) mit Zahnrädern (25) bestückt sind, die in an den Führungselementen (15, 16) im Bereich der ersten Führungsnuten (17) montierten Zahnstangen (26) eingreifen, so dass die Bewegung des Deckels (2) innerhalb der Führungsnuten (17, 18) synchronisiert ist.

7. Handschuhkasten (1) nach einem der Ansprüche 1 bis 6,
**dadurch gekennzeichnet, dass** die seitlich abstehenden Zapfen (7) durch eine Verbindungswelle (31) gebildet werden, die in die beiden ersten Führungsnuten (17) eingreift.

8. Handschuhkasten (1) nach Anspruch 7,
**dadurch gekennzeichnet, dass** die Verbindungswelle (31) an ihren Wellenenden Zahnräder (25) aufweist, die in eine an den seitlichen Führungselementen (15, 16) im Bereich der ersten Führungsnut (17) montierten Zahnstange. (26) eingreifen, so dass die Bewegung des Deckels (2) innerhalb der Führungsnuten (17, 18) synchronisiert ist.

9. Handschuhkasten (1) nach einem der Ansprüche 1 bis 8,
**dadurch gekennzeichnet, dass** der Hebel (13) mit einem Dämpfer (20) versehen ist.

10. Handschuhkasten (1) nach einem der Ansprüche 1 bis 8,
**dadurch gekennzeichnet, dass** das Führungselement (19) am Hebel (13) mit einem Dämpfer (20) versehen ist.

11. Handschuhkasten (1) nach einem der Ansprüche 1 bis 10, **daurch gekennzeichnet, dass** der Zwischenanschlag ein federgelagerter Raststift ist.

12. Handschuhkasten (1) nach einem der Ansprüche 1 bis 11,
**dadurch gekennzeichnet, dass** das Öffnen des Deckels (2) rein mechanisch ist und das vollständige Aufschwenken des Deckels (2) durch mechanischen Druck auf den Zwischenanschlag ausgelöst ist.

13. Handschuhkasten (1) nach einem der Ansprüche 1 bis 11,
**dadurch gekennzeichnet, dass** das Öffnen des Deckels (2) über einen oder mehrere elektrische Stellmotoren erfolgt, die an der Verbindungswelle (31), den Zapfen (7) oder den Zahnrädern (25) eingreifen.

14. Handschuhkasten (1) nach einem der Ansprüche 1 bis 13,
**dadurch gekennzeichnet, dass** der obere Öffungsbereich (11) des Handschuhkastens (1) zusätzliche Staufächer für Kleingegenstände oder Unterlagen aufweist.

15. Handschuhkasten nach einem der Ansprüche 1 bis 14,
**dadurch gekennzeichnet, dass** der obere Öffnungsbereich (11) des Handschuhkastens (1) zusätzlich eingebaute Geräte oder Funktionsteile, wie z.B. Becherhalter, Laptop, Telefon, Radio, CD-Wechsler oder MP3-Player, Navigationssystem etc., aufweist.

## Claims

1. A glove box (1), in particular for motor vehicles, having a glove compartment (5) comprising two lateral guide elements (15, 16) and a cover (2), which can assume a closed position, an open position and an intermediate position defined by an intermediate stop, in the intermediate position a first, upper opening zone (11) of the glove compartment being uncovered and the entire glove compartment (5) being uncovered only in the open position, wherein the cover (2) additionally comprises:
- laterally projecting first pin (7) at one lower edge and opposite a laterally projecting second pin (7), which together represent an axis of rotation (7) around which the cover (2) can pivot parallel to the transverse axis of the vehicle, and
- lever (13), which is rigidly connected to the cover (2) and comprises a guide element (19),
and the two lateral guide elements (15, 16) comprise:
- a first lateral guide element (15) with a first guide track (17) into which the first pin (7) engages, and a second guide track (18), into which the guide element (19) of the lever (13) engages, and also
- a second lateral guide element (16) with at least one first guide track (17) running synchronously to the first guide track (17) of the first lateral guide element (15), into which track the second pin (7) engages, with the path of the first and second guide tracks (17, 18) being designed such that the cover (2) is firstly released downwards from the closed position, then is guided in the direction of travel (F) along the contour of the glove compartment (5) to the intermediate position and then swivels downwards around the axis of rotation (7) for the complete opening of the glove box (1).

2. A glove box (1) according to Claim 1,
**characterised in that**
the first guide track (17) is largely parallel to the contour of the glove compartment (5) in the direction of travel (F).

3. A glove box (1) according to Claim 1 or 2,
**characterised in that**
the second guide track (18) is downwardly guided from the closed position in a first step (22) to open the cover against the direction of travel (F) at an angle of approx. 20 to 60°, then it is guided in a second step (23) at an angle of approx. 20 to 60° in the direction of travel (F), whereby the cover (2) is guided in the direction of travel (F) along the contour of the glove compartment (5), and finally in a third step (24) it is downwardly guided for the complete swinging-open of the cover (2) at an angle of approx. 30 to 60°, relating to the path of the second step (23), against the direction of travel (F).

4. A glove box (1) according to Claim 3,
**characterised in that**
preferably the first step (22) is guided in a straight line, the second step (23) is guided in a slightly upwardly curved arc and the third step (24) is guided in a downwardly curved arc.

5. A glove box (1) according to one of Claims 1 to 4,
**characterised in that**
the axis of rotation (7) is provided in the end position of the first guide track (17) in the direction of travel when the guide element (19) of the lever (2) has reached the intermediate position in the second guide track (18).

6. A glove box (1) according to one of Claims 1 to 5,
**characterised in that**
the laterally protruding pins (7) are equipped with pinions (25) that engage in toothed racks (26) mounted on the guide elements (15, 16) in the region of the first guide tracks (17) so that the movement of the cover (2) inside the guide tracks (17, 18) is synchronised.

7. A glove box (1) according to one of Claims 1 to 6,
**characterised in that**
the laterally protruding pins (7) are formed by a connecting shaft (31) that engages in the two first guide tracks (17).

8. A glove box (1) according to Claim 7,
**characterised in that**
the connecting shaft (21) at its ends comprises pinions (25) that engage in a toothed rack (26) mounted on the lateral guide elements (15, 16) in the region of the first guide track (17) so that the movement of the cover (2) inside the guide tracks (17, 18) is synchronised.

9. A glove box (1) according to one of Claims 1 to 8,
**characterised in that**
the lever (13) is provided with a damper (20).

10. A glove box (1) according to one of Claims 1 to 8,
**characterised in that**
the guide element (19) on the lever (13) is provided with a damper (20).

11. A glove box (1) according to one of Claims 1 to 10,
**characterised in that**
the intermediate stop is a spring-mounted latch pin.

12. A glove box (1) according to one of Claims 1 to 11,
**characterised in that**
the opening of the cover (2) is purely mechanical and the complete swinging-open motion of the cover (2) is triggered by mechanical pressure on the intermediate stop.

13. A glove box (1) according to one of Claims 1 to 11,
**characterised in that**
opening of the cover (2) is performed by means of one or more electric servo-motors that engage on the connecting shaft (31), the pin (7) or the pinions (25).

14. A glove box according to one of Claims 1 to 13,
**characterised in that**
the upper opening zone (11) of the glove box (1) comprises additional storage compartments for small objects or documents.

15. A glove box according to one of Claims 1 to 14,
**characterised in that**
the upper opening zone (11) of the glove box (1) also comprises installed devices or functional parts, such as e.g. cup holders, laptop, telephone, radio, CD changer or MP3 player, navigation system, etc.

## Revendications

1. Boîte à gants (1), notamment pour des véhicules automobiles comportant un compartiment de boîte à gants (5) ayant deux éléments de guidage latéraux (15, 16) et un couvercle (2) qui peut prendre une position de fermeture, une position d'ouverture et une position intermédiaire définie par une fixation intermédiaire et,
dans la position intermédiaire, une première zone d'ouverture supérieure (11) de la boîte à gants est libérée et ce n'est que dans la position d'ouverture que l'ensemble de la boîte à gants (5) est accessible,
le couvercle (2) ayant en plus
- un premier goujon (7) venant latéralement en saillie au niveau du bord inférieur et en face de celui-ci, un second goujon (7) latéralement en saillie, ces deux goujons définissant un axe de rotation (7) autour duquel le couvercle (2) peut pivoter parallèlement à l'axe transversal du véhicule et
- un levier (13) relié rigidement au couvercle (2) et ayant un élément de guidage (19), et
les deux éléments de guidage latéraux (15, 16) comportent :
- un premier élément de guidage latéral (15) avec une première rainure de guidage (17) dans laquelle le premier goujon (7) est en prise et une seconde rainure de guidage (18) dans laquelle l'élément de guidage (19) du levier (13) est en prise, et
- un second élément de guidage latéral (16) ayant au moins une première rainure de guidage (17) dirigée en synchronisme avec la première rainure de guidage (17) du premier élément du guidage latéral (15), dans laquelle est en prise le second goujon (7),
le tracé de la première et de la seconde rainure de guidage (17, 18) étant conçu pour que le couvercle (2) soit tout d'abord libéré de sa position de fermeture vers le bas, puis dans la direction de déplacement (F) le long du contour de la boîte à gants (5) jusqu'à la position intermédiaire et ensuite pour l'ouverture complète de la boîte à gants (1), il est basculé vers le bas autour de l'axe de rotation (7).

2. Boîte à gants (1) selon la revendication 1,
**caractérisée en ce que**
la première rainure de guidage (17) est guidée pratiquement parallèlement au contour du compartiment de boîte à gants (5) selon la direction de déplacement (F).

3. Boîte à gants (1) selon la revendication 1 ou 2,
**caractérisée en ce que**
la seconde rainure de guidage (18) présente à partir de la position de fermeture, un premier segment (22) pour ouvrir le couvercle, dans la direction opposée à la direction de déplacement (F), incliné suivant un angle d'environ 20° à 60° vers le bas et ensuite un second segment (23), suivant un angle d'environ 20° à 60° dans la direction de déplacement (F), vers le bas, jusqu'à la position intermédiaire, le couvercle (2) est guidé dans la direction de déplacement (F) le long du contour du compartiment de boîte à gants (5) et finalement un troisième segment (24) pour basculer en ouverture complète le couvercle (2), incliné d'un angle d'environ 30° à 60° par rapport au tracé du second segment (23) dans la direction opposée à la direction de déplacement (F) vers le bas.

4. Boîte à gant (1) selon la revendication 3,
**caractérisée en ce que**
de préférence, le premier segment (22) est rectiligne, le second (23) est un arc de cercle légèrement cintré vers le haut et le troisième segment (24) correspond à un arc de cercle tourné vers le bas.

5. Boîte à gants (1) selon l'une des revendications 1 à 4,
**caractérisée en ce que**
l'axe de rotation (7) dans la position de fin de course de la première rainure de guidage (17) est situé à l'avant dans le sens de déplacement, lorsque l'élément de guidage (19) du levier (2) atteint la position intermédiaire dans la seconde rainure de guidage (18).

6. Boîte à gants (1) selon l'une des revendications 1 à 5,
**caractérisée en ce que**
les goujons (7) en saillie vers le côté sont garnis de pignons dentés (25) en prise avec des crémaillères (26) prévues sur les éléments de guidage (15, 16) dans la zone des premières rainures de guidage (17) pour que le mouvement du couvercle (2) soit synchronisé à l'intérieur des rainures de guidage (17, 18).

7. Boîte à gants (1) selon l'une des revendications 1 à 6,
**caractérisée en ce que**
les goujons (7) latéralement en saillie sont constitués par un axe de liaison (31) pénétrant dans les deux premières rainures de guidage (17).

8. Boîte à gants (1) selon la revendication 7,
**caractérisée en ce que**
les extrémités de l'axe de liaison (31) portent des pignons dentés (25) en prise avec une crémaillère (26) prévue sur les éléments de guidage latéraux (15, 16) au niveau de la première rainure de guidage (17) pour synchroniser le mouvement du couvercle (2) dans les rainures de guidage (17, 18).

9. Boîte à gants (1) selon l'une des revendications 1 à 8,
**caractérisée en ce que**
le levier (13) est muni d'un amortisseur (20).

10. Boîte à gants (1) selon l'une des revendications 1 à 8,
**caractérisée en ce que**
l'élément de guidage (19) du levier (13) est muni d'un amortisseur (20).

11. Boîte à gants (1) selon l'une des revendications 1 à 10,
**caractérisée en ce que**
la butée intermédiaire est une broche d'enclipsage montée à ressort.

12. Boîte à gants (1) selon l'une des revendications 1 à 11,
**caractérisée en ce que**
l'ouverture du couvercle (2) se fait de manière purement mécanique et le pivotement pour l'ouverture complète du couvercle (2) se fait par une poussée mécanique sur la butée intermédiaire.

13. Boîte à gants (1) selon l'une des revendications 1 à 11,
**caractérisée en ce que**
l'ouverture du couvercle (2) se fait par l'intermédiaire d'un ou plusieurs moteurs d'actionneurs électriques en prise avec l'axe de liaison (31), les tourillons (7) ou les pignons dentés (25).

14. Boîte à gants (1) selon l'une des revendications 1 à 13,
**caractérisée en ce que**
la zone d'ouverture supérieure (11) de la boîte à gants (1) comporte des compartiments supplémentaires pour de petits objets ou des documents.

15. Boîte à gants (1) selon l'une des revendications 1à14,
**caractérisée en ce que**
la zone d'ouverture supérieure (11) de la boîte à gants (1) comporte des appareils ou des pièces fonctionnelles, intégrés en plus, tels que par exemple un porte-gobelet, un petit ordinateur portable, un téléphone, une radio, un changeur de disques CD, un lecteur MP3, un système de navigation, etc...
